# EUROPEAN PATENT SPECIFICATION

(11) **EP 0 405 766 B1**
(45) Date of publication and mention of the grant of the patent: **12.05.1993**
(21) Application number: 90306094.5
(22) Date of filing: 05.06.1990
(51) Int. Cl.: B60J 7/22, B60J 7/043

(54) **Opening roof for motor vehicle**
Kraftfahrzeug mit zu öffnendem Dach
Toit ouvrant pour véhicule automobile

(30) Priority: 24.06.1989 GB 8914565
(43) Date of publication of application: 02.01.1991
(73) Proprietor: Britax Weathershields Limited, Birmingham B5 7EH (GB)
(72) Inventor: Cunningham, Douglas James, Portsmouth, Hampshire (GB)
(74) Representative: Hollinghurst, Antony

(56) References cited:
- EP-A- 0 348 073
- FR-A- 2 370 602
- GB-A- 2 056 380
- GB-A- 2 171 964

## Description

This invention relates to an opening roof for a motor vehicle of the type in which at least the front part of an opening in the vehicle roof is covered by a panel which is movable to an open position by pivoting about a transverse horizontal axis adjacent to its front edge so as to raise its rear edge above the vehicle roof, as described in GB-A-2171964.

According to the invention, in an opening roof of the foregoing type, a front frame member is fixed to the top surface of the vehicle roof so as to extend along the edge of the opening and has an edge groove in its front surface and a top groove in its top surface, and the front edge of the panel has a downwardly extending flange located in front of the front frame member and carrying a lug arranged to engage in the edge groove, the panel also having a downwardly extending projection arranged to extend into the top groove and engage with the outer side thereof to prevent disengagement of the lug from the edge groove when the panel is at less than a predetermined angle to the vehicle roof.

Preferably the outer side of the top groove is of arcuate cross-section, centred on a central location within the edge groove. The edge groove itself may be of part circular cross-section centred on said central location, and the lug may carry a formation of complementary shape.

The invention can be to be applied to an opening roof of the type in which the pivoting panel covers the front part of the roof opening and the rest of the opening is covered by a sliding panel which is mounted on a pair of tracks secured to the vehicle roof so as to extend along respective sides of the opening and project behind the opening, so that the sliding panel is slidable to a position above the vehicle roof behind the opening. With this type of roof, in accordance with a preferred feature of the invention, the tracks are of the same cross=section as the front frame member with their respective edge grooves facing outwardly, and the sliding panel has a respective downwardly extending flange on each side located outside the corresponding track and carrying a lug arranged to engage in the corresponding edge groove, together with a respective downwardly extending projection arranged to extend into the top groove of the corresponding track so as to engage with drive means therein.

Preferably each top groove has a recess in one of its side walls and the drive means comprises a drive cable received in such recess. Recesses of this type may be provided in both side walls, one accommodating the drive cable for the left hand side of the sliding panel and the other the drive cable for the right hand side thereof.

An embodiment of the invention will now be described, by way of example, with reference to the accompanying drawings in which:
Figure 1 is a perspective view of the roof of a motor car having an opening roof in accordance with the invention;
Figure 2 is a perspective view of the roof shown in Figure 1, but with the opening panels removed;
Figure 3 is a scrap sectional view taken on the line 3 - 3 in Figure 1;
Figure 4 is a scrap sectional view taken on the line 4 - 4 in Figure 1;
Figure 5 is a scrap sectional view taken on the line 5 - 5 in Figure 1; and
Figure 6 is a scrap sectional view, similar to Figure 4, but with the front panel in its open position.

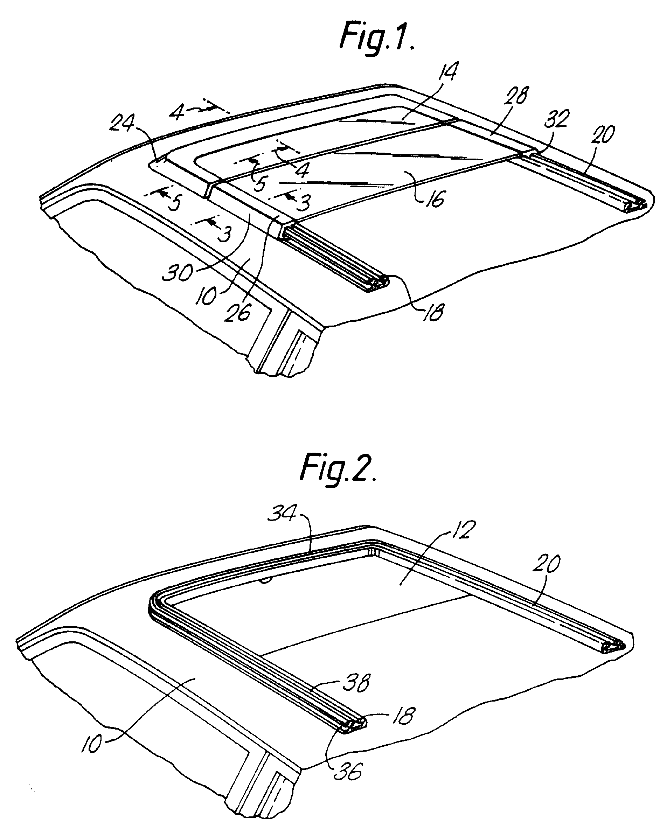

As shown in Figure 1, the roof 10 of a motor vehicle has an opening 12, the front part of which is covered by a panel 14 which is hinged along its front edge. The rear part of the opening is covered by a second sliding panel 16 which is mounted on a pair of tracks 18 and 20 which are mounted on the vehicle roof 10 so as to extend along respective sides of and project behind the opening 12.

The front and side edges of the front panel 14 are bounded by a frame member 22 having a downwardly extending flange 24 on its outer edge. The side edges of the rear panel 16 are bounded by similarly shaped frame members 26 and 28 having downwardly extending flanges 30 and 32 on their outer edges. It can be seen from Figure 2 (in which the two panels 14 and 16 have been removed) that the tracks 18 and 20 are formed integrally with a front frame member 34 which interconnects their front ends and extends across the front edge of the opening 12. This integral unit is of uniform cross-section throughout its length in that it has a first groove 36 in its outwardly facing side surface and a second groove 38 in its top surface. The outer side 40 of the second groove 38 is of arcuate cross-section, centred on a location within the first groove 36.

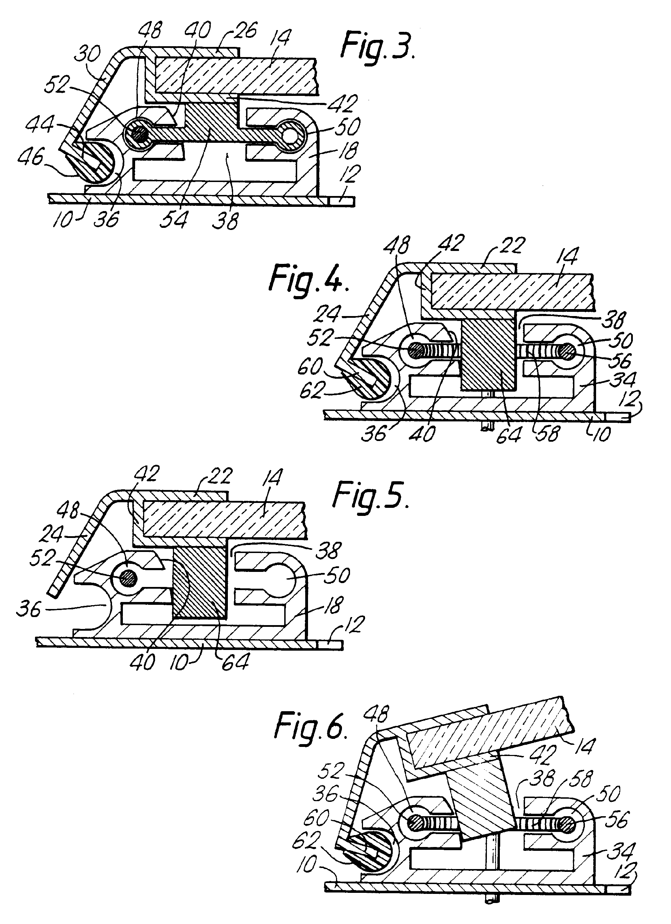

Referring to Figure 3, the flange 26 has a downwardly and inwardly directed formation 42 which embraces the edge of the panel 14. The lower edge of the flange 30 has an inwardly directed lug 44 which carries a plastics slider 46 engaging in the first groove 36 in the outside edge of the track 18. Openings in the side walls of the second groove 38 communicate with respective cylindrical bores 48 and 50. The bore 48 nearer to the side of the car contains a drive cable 52. A drive coupling member 54 projects downwardly from the formation 42 into the groove 38 and has side projections extending into the bores 48 and 50, the projection extending into the bore 48 being clamped onto the drive cable 52.

The track 20 on the other side of the roof has a second drive cable 56 accommodated in the other bore 50, the two drive cables both extending into the front frame member 34 where they are coupled to common drive means, which include a pinion 58, in a similar manner to that described in EP-A-0348069.

As can be seen from Figure 4, the part of the frame member 22 which extends across the front edge of the front panel 14 is of the same cross-section as the frame members 26 and 28, in that its flange 24 has a lug 60 on its lower edge projecting into the groove 36. The lug 60 carries a plastics member 62 of the same shape as the slider 46 (Figure 2). As can be seen in Figure 5, the lug 60 is cut away from the parts of the frame member 22 which extend along the sides of the front panel 14 so as to allow the panel 14 to pivot about the plastics member 62.

A guide member 64 projects downwardly from the frame member 22 and its outer edge remains in engagement with the arcuate outer side 40 of the groove 38 as the panel 14 moves from the position shown in the Figure 4 to the position shown in Figure 6. The panel 14 can be disengaged from the frame member 34 only after it has been tilted sufficiently to lift the projection 64 clear of the groove 36.

## Claims

1. An opening roof for a motor vehicle in which at least the front part of an opening (12) in the vehicle roof (10) is covered by a panel (14) which is movable to an open position by pivoting about a transverse horizontal axis (60, 62) adjacent to its front edge so as to raise its rear edge above the vehicle roof (10), characterised in that a front frame member (34) is fixed to the top surface of the vehicle roof (10) so as to extend along the edge of the opening (12) and has an edge groove (36) in its front surface and a top groove (38) in its top surface, and the front edge of the panel (14) has a downwardly extending flange (24) located in front of the front frame member (22) and carrying a lug (44) arranged to engage in the edge groove (36), the panel (14) also having a downwardly extending projection (64) arranged to extend into the top groove (38) and engage with the outer side (40) thereof to prevent disengagement of the lug (44) from the edge groove (36) when the panel (14) is at less than a predetermined angle to the vehicle roof (10).

2. An opening roof according to claim 1, wherein the outer side (40) of the top groove (38) is of arcuate cross-section, centred on a central location within the edge groove (36).

3. An opening roof according to claim 2, wherein the edge groove (36) is of part circular cross-section centred on said central location, and the lug (44) carries a formation (46) of complementary shape.

4. An opening roof according to claim 1, 2 or 3, wherein the pivoting panel (14) covers the front part of the roof opening (12) and the rest of the opening (12) is covered by a sliding panel (16) which is mounted on a pair of tracks (18, 20) secured to the vehicle roof (10) so as to extend along respective sides of the opening (12) and project behind the opening (12), so that the sliding panel (16) is slidable to a position above the vehicle roof (10) behind the opening (12).

5. An opening roof according to claim 4, wherein the tracks (18, 20) are of the same cross-section as the front frame member (22) with their respective edge grooves (36) facing outwardly, and the sliding panel (16) has a respective downwardly extending flange (26, 28) on each side located outside the corresponding track (18, 20) and carrying a lug (44) arranged to engage in the corresponding edge groove (36), together with a respective downwardly extending projection (54) arranged to extend into the top groove (38) of the corresponding track (18, 20) so as to engage with drive means therein.

6. An opening roof according to claim 4 or 5, wherein each top groove (38) has a recess (48, 50) in one of its side walls and the drive means comprises a drive cable (52, 56) received in such recess (48, 50).

7. An opening roof according to claim 6, wherein each top groove (38) has a respective recess (48, 50) in each of its side walls, one accommodating the drive cable (52) for the left hand side of the sliding panel (16) and the other the drive cable (56) for the right hand side of the sliding panel (16).

## Patentansprüche

1. Zu öffnendes Dach für ein Kraftfahrzeug, bei welchem zumindest der vorderseitige Abschnitt einer Öffnung (12) in dem Fahrzeugdach (10) durch eine Platte (14) abgedeckt ist, die durch Schwenken um eine, an ihre frontseitige Kante angrenzende, quer gerichtete, horizontale Achse (60, 62) in eine geöffnete Stellung in der Weise bewegbar ist, daß ihre rückseitige Kante über das Fahrzeugdach (10) angehoben wird, **dadurch gekennzeichnet,** daß ein vorderseitiges Rahmenelement (34) in der Weise mit der oberen Oberfläche des Fahrzeugdaches (10) befestigt ist, daß sich das Rahmenelement (34) entlang der Umrandung der Öffnung (12) erstreckt, und in seiner vorderseitigen Oberfläche eine randseitige Nut (36) sowie in seiner oberen Oberfläche eine obere Nut (38) aufweist und daß die vorderseitige Kante der Platte (14) mit einem sich nach abwärts erstreckenden flanschartigen Rand bzw. Flansch (24) versehen ist, welcher stirnseitig in Bezug auf das vorderseitige Rahmen-Element (22) angeordnet ist und einen Ansatz (44) trägt, der zum Ineingriffgelangen in die randseitige Nut (36) angeordnet ist, wobei die Platte (14) außerdem einen sich nach unten erstreckenden Vorsprung (64) aufweist, der so angeordnet ist, daß er sich in die obere Nut (38) hinein erstreckt und gegen deren äußere Seite (40) zum Anschlag gelangt, um, wenn die Platte (14) sich unter einem kleineren als einem vorgegebenen Winkel gegenüber dem Fahrzeugdach (10) befindet, ein Ausrücken des Ansatzes (44) aus der randseitigen Nut (36) zu verhindern.

2. Zu öffnendes Dach gemäß Anspruch 1, bei welchem die äußere Seite (40) der oberen Nut (38) von einem gekrümmten querschnitt ist, welcher in Bezug auf eine zentrale Stelle innerhalb der randseitigen Nut (36) zentriert ist.

3. Zu öffnendes Dach nach Anspruch 2, bei welchem die randseitige Nut (36) von einem teilkreisförmigen querschnitt ist, welcher in Bezug auf die vorgenannte zentrale Stelle zentriert ist, und der Ansatz (44) ein Gebilde (46) von einer komplementären Gestalt trägt.

4. Zu öffnendes Dach nach Anspruch 1, 2 oder 3, bei welchem die zu schwenkende Platte (14) den vorderseitigen Abschnitt der Dach-Öffnung (12) abdeckt und der Rest der Öffnung (12) durch eine Schiebe-Platte (16) abgedeckt ist, welche auf einem Paar von Führungsschienen (18, 20) montiert ist, die in der Weise an dem Fahrzeugdach (10) befestigt sind, daß sie sich entlang entsprechender Seiten der Öffnung (12) erstrecken und bis hinter die Öffnung (12) vorspringen, so daß die Schiebe-Platte (16) bis zu einer Stellung hinter der Öffnung (12) oberhalb des Fahrzeugdaches (10) verschiebbar ist.

5. Zu öffnendes Dach nach Anspruch 4, bei welchem die Führungsschienen (18, 20) den gleichen querschnitt wie das vorderseitige Rahmen-Element (22) aufweisen, wobei ihre jeweiligen randseitigen Nuten (36) nach außen hin liegen, und die Schiebe-Platte (16) auf jeder Seite jeweils einen sich nach abwärts erstreckenden flanschartigen Rand bzw. Flansch (26, 28) aufweist, welcher außerhalb der entsprechenden Fühhrungsschiene (18, 20) angeordnet ist und einen Ansatz (44) trägt, welcher zum Ineingriffgelangen in die entsprechende randseitige Nut (36) angeordnet ist, wobei gleichzeitig ein jeweiliger, sich nach abwärts erstreckender Vorsprung (54), so angeordnet ist, daß er sich in die obere Nut (38) der entsprechenden Führungsschiene (18, 20) hinein erstreckt, so daß er mit darin befindlichen Antriebs-Mitteln in Eingriff gelangt.

6. Zu öffnendes Dach nach Anspruch 4 oder 5, bei welchem eine jede obere Nut (38) in der einen ihrer Seiten-Wände eine Ausnehmung (48, 50) aufweist und die Antriebs-Mittel ein Antriebs-Kabel (52, 56) umfassen, welches in einer derartigen Ausnehmung (48, 50) aufgenommen ist.

7. Zu öffnendes Dach nach Anspruch 6, bei welchem eine jede obere Nut (38) in einer jeden ihrer seitlichen Wände eine entsprechende Ausnehmung (48, 50) aufweist, von denen die eine das Antriebskabel (52) für die linksgängige Seite der Schiebe-Platte (16) und die andere das Antriebs-Kabel (56) für die rechtsgängige Seite der Schiebe-Platte (16) aufnehmen.

## Revendications

1. Un toit ouvrant pour véhicule automobile, dans lequel, au moins, la partie avant d'une ouverture (12) du pavillon du véhicule (10) est recouverte d'un panneau (14), mobile vers une position d'ouverture par une rotation autour d'un axe horizontal transversal (60, 62) adjacent à son bord avant, de manière à soulever son bord arrière au dessus du pavillon du véhicule (10), caractérisé en ce qu'un élément de châssis avant (34) est fixé sur la surface supérieure du pavillon du véhicule (10) de manière à s'étendre le long du bord de l'ouverture (12), et pourvu d'une rainure de bord (36) dans sa surface avant, et d'une rainure supérieure (38) dans sa surface supérieure, et que le bord avant du panneau (14) est pourvu d'une bride dirigée vers le bas (24), située à l'avant de l'élément de châssis avant (22) et munie d'une patte (44) agencée pour venir en prise dans la rainure de bord (36) le panneau (14) comprenant également une saillie dirigée vers le bas (64), agencée pour se prolonger dans la rainure supérieure (38) et venir en prise sur le bord extérieur (40) de celle-ci, pour éviter que la patte (44) ne se dégage de la rainure de bord (36) lorsque le panneau (14) forme un angle inférieur à un angle prédéterminé par rapport au pavillon du véhicule (10).

2. Un toit ouvrant selon la revendication 1, dans lequel le bord extérieur (40) de la rainure supérieure (38) est en coupe transversale en forme d'arc centré en une position centrale située dans la rainure de bord (36).

3. Un toit ouvrant selon la revendication 2, dans lequel la rainure de bord (36) est partiellement circulaire en coupe transversale et centrée dans ladite position centrale et la patte (44) porte une formation (46) de forme complémentaire.

4. Un toit ouvrant selon la revendication 1, 2 ou 3, dans lequel le panneau pivotant (14) recouvre la partie avant de l'ouverture de toît (12) et le reste de l'ouverture (12) est recouvert par un panneau glissant (16) monté sur une paire de rails (18, 20), fixés sur le pavillon du véhicule (10) de manière à s'étendre le long des côtés respectifs de l'ouverture (12) et dépasser derrière l'ouverture (12),afin que le panneau glissant (16) puisse glisser vers une position au-dessus du pavillon du véhicule (10), derrière l'ouverture (12).

5. Un toit ouvrant selon la revendication 4, dans lequel les rails (18, 20) ont la même section en coupe droite que l'élément de châssis avant (22), avec leurs rainures de bord respectives (36) dirigées vers l'extérieur, et le panneau glissant (16) comporte une bride correspondante, dirigée vers le bas (26, 28) de chaque côté, située en dehors du rail correspondant (18, 20) et pourvu d'une patte (44) agencée pour venir en prise dans la rainure de bord correspondante (36), ainsi que d'une saillie correspondante,dirigée vers le bas (54), agencée pour s'étendre dans la rainure supérieure (38) du rail correspondant (18, 20) de manière à venir en prise sur les moyens d'entraînement ou de commande à l'intérieur.

6. Un toit ouvrant selon la revendication 4 ou 5, dans lequel chaque rainure supérieure (38) comprend une cavité (48, 50) dans l'une de ses parois latérales et les moyens d'entraînement ou de commande comprennent un câble de commande (52, 56) logé dans cette cavité (48, 50).

7. Un toit ouvrant selon la revendication 6, dans lequel chaque rainure supérieure (38) comprend une cavité respective (48, 50) dans chacune de ses parois latérales, l'une recevant le câble de commande (52) du côté gauche du panneau glissant (16) et l'autre,le câble de commande (56) du côté droit du panneau glissant (16).
